# EUROPÄISCHE PATENTSCHRIFT

(11) **EP 0 951 331 B1**
(45) Veröffentlichungstag und Bekanntmachung des Hinweises auf die Patenterteilung: **23.05.2001**
(21) Anmeldenummer: 97948713.9
(22) Anmeldetag: 31.10.1997
(51) Int. Cl.: B01D 35/06, C02F 1/48

(54) **FILTERVORRICHTUNGEN**
FILTER DEVICES
DISPOSITIFS FILTRANTS

(30) Priorität: 06.11.1996 DE 19645653
(43) Veröffentlichungstag der Anmeldung: 27.10.1999
(73) Patentinhaber: Dorenwendt, Wolfgang, 37359 Wachstedt (DE); Hosse, Herbert, 06333 Hettstedt (DE)
(72) Erfinder: HOSSE, Herbert, D-06333 Hettstedt (DE)
(74) Vertreter: Kagelmann, Manfred, Dipl.-Ing.
(86) Internationale Anmeldenummer: DE9702563
(87) Internationale Veröffentlichungsnummer: WO9819769

(56) Entgegenhaltungen:
- BE-A- 675 731
- DE-A- 3 838 931
- DE-A- 4 308 390
- GB-A- 2 256 649
- US-A- 4 350 590

## Beschreibung

Die Erfindung betrifft Filtervorrichtungen zur Filtration von Trink-, Sanitär-, Heiz- und Kühlwässern.

Es besteht die dringende Aufgabe die Trink-, Sanitär-, Heiz- und Kühlwässer nicht nur von Schmutzpartikeln zu befreien, sondern insbesondere die temporären Härtebildner, Calcium- und Magnesiumcarbonat sowie metallische Korrosionsprodukte in lösliche Formen umzuwandeln, um damit funktionsstörende Inkrustationen in Wassersystemen zu vermeiden und bereite vorhandene schonend aufzulösen.

Bekannt sind Filterelemente und Filtervorrichtungen in vielfältiger Ausführung, die ausschließlich der Schmutzselektion und damit der Sauberhaltung der Wässer dienen. Sie haben den Nachteil, daß sie nur einer, der für sie typischen Funktion, gerecht werden, eine Wasserbehandlung im Sinne der Vermeidung störender Inkrustationen erfolgt nicht und daß sie teilweise schlecht entsorgt werden können.
Bekannt sind physikalische Wasserbehandlungsgeräte, die mittels magnetischer Wellen, erzeugt von Permanent- oder Elektromagneten, die kristalline Struktur der Carbonate beeinflussen sollen. Ihre Wirkung ist umstritten. Von Nachteil ist, daß sie keine Filterfunktion erfüllen.
Bekannt sind physikalische Wasserbehandlungsgeräte, die nach elektrolytischem Prinzip arbeiten. Nachteil ist, daß sie einer externen Stromquelle bedürfen und keine Filterfunktion erfüllen.
Bekannt ist ein physikalisches Wasserbehandlungsgerät nach der Druckschrift EP 267 296 mit interner elektrochemische Spannungsquelle.
Nachteilig ist,
- daß dieses Gerät keine Filterfunktion erfüllt,
- daß dem Gerät zum Schutz seiner Funktion grundsätzlich ein Wasserfilter vorinstalliert werden muß, um Elektodenschluß zu verhindern,
- daß es nur über zwei Elektroden verfügt, deren Größe und Abstand durch die Bauform vorgegeben sind und damit keine Variationen bezüglich der Feldstärke, ihrer Richtung und der elektrischen Ladung zuläßt, um die Behandlung unterschiedlicher Wasserqualitäten effektiver zu ermöglichen,
- daß es bei extrem schlechten Wasserqualitäten mit hoher Leitfähigkeit, wie in Kühlkreisläufen häufig anzutreffen, bei ungenügender Prophylaxfilterung und durch die stets gleichgerichtete Feldstärke zu Ionen- und Schwebstoffanhaftungen an den Elektroden und zu Funktionsstörungen bzw. -ausfällen führt, die nur durch periodisch aufwendige Servicemaßnahmen eingeschränkt werden können,
- daß die Spannungsmessung und damit die Funktions- und Qualitätsüberwachung nicht möglich ist.
Bekannt ist ein elektronischer Kalkschutzfilter nach Druckschriften DE-OS 38 38 931 A 1, DE Gebrauchsmuster 89 01 740 und DE Gebrauchsmuster 88 14 390 bei denen im Filterraum zwei Elektroden untergebracht sind, um das Wasser elektrolytisch zu beeinflussen. Nachteilig ist, daß die Elektroden mit 220 V und 500 Watt extrem beaufschlagt werden und ein hoher elektronischer Aufwand betrieben werden muß, wobei nur die kristalline Form der Carbonate verändert wird und die Mineralien Calcium und Magnesium teilweise im Filter ausgeschwemmt werden.
Bekannt sind Ionenaustauscher, die Calcium und Magnesium durch Natrium ersetzen und dadurch das Wasser enthärten. Nachteilig ist die Natriumanreicherung im Trinkwasser, der Entzug der lebenswichtigen Mineralien Calcium und Magnesium und die chemische Belastung der Kläranlagen.
Die Druckschrift US4350590 offenbart eine Filtervorrichtung, welche Elektroden enthält, wobei das Filterelement austauschbar ist. Nachteilig bei dieser Lösung ist, daß die Filtervorrichtung mit einer externen Spannungsquelle versehen werden muß.
Die Druckschrift DE4308390 offenbart ein Filterelement mit Elektroden, welche zum einen Teil als poröse metallische Platte ausgebildet sind und zum anderen Teil als Filterschicht aus Kohlefaser oder Aktivkohle bestehenden, wodurch beide ein unterschiedliches Spannungspotential besitzen. Auch bei dieser Lösung ist nachteilig, daß die Elektroden notwendig an eine externe Spannungsquelle angeschlossen sind.

Die Aufgabe der Erfindung besteht darin, die erwähnten Nachteile des Standes der Technik zu beseitigen und Filtervorrichtungen zu entwickeln, die beiden Funktionen, Wasserfilterung und Wasserbehandlung, in sich vereinen.
Erfindungsgemäß wird die Aufgabe durch die im Patentanspruch 1 angegebenen Merkmale gelöst. Bevorzugte Weiterbildungen der Erfindung ergeben sich aus den Unteransprüchen.
Die Vorteile der Erfindung bestehen darin,
- daß die Filtervorrichtungen zwei Funktionen übernehmen, die Filterung und die Wasserbehandlung im Gegensatz zu üblichen Filterelementen bzw. Filtervorrichtungen, die nur der Filterung dienen und zu den bekannten Wasserbehandlungsgeräten, die nur die Umwandlung der Wasserinhaltsstoffe bewirken,
- daß diese Filtervorrichtungen im Vergleich zu üblichen Wasserbehandlungsgeräten sehr billig und technisch günstig herstellbar sind,
- daß eine Vielfalt von Filtermedien und -formen für die Applikation der Elektroden geeignet ist,
- daß Kalk-, Silizium- und Korrosionsinkrustationen ohne Verwendung von Chemikalien und externem Strom verhindert und bereits vorhandene schonend abgebaut werden,
- daß nach dem Abbauprozeß passive Korrosionsschutzschichten aufgebaut werden,
- daß dem Trinkwasser die lebensnotwendigen Mineralien Calcium und Magnesium erhalten bleiben,
- daß durch geringeren Waschmitteleinsatz die Umwelt geschont wird,
- daß ihre Funktion nicht durch Ionen- oder Schwebstoffbesatz bzw. durch Elektrodenschluß eingeschränkt wird,
- daß die Filtervorrichtungen überwiegend über eine Vielzahl von galvanischen Elementen verfügen, deren Polarität und Feldstärke ebenso wie die Ladung variiert werden können und dadurch über eine bessere Funktionsbreite verfügen als übliche Wasserbehandlungsgeräte,
- daß es aufgrund dieser Tatsache möglich ist, schwereren Bedingungen bezüglich Wasserqualität in Kühlsystemen und Anlagenkonstruktionen gerecht zu werden,
- daß die Filterelemente unproblematisch entsorgt werden können,
- daß die Filterelemente vor ihrem Einsatz einer Qualitätskontrolle und Funktionsprüfung durch Spannungsmessung unterzogen werden können.
Die Erfindung wird durch die Ausführungsbeispiele nach
- Figur 1 als ein Filterelement mit ringförmig angeordneten Elektroden,
- Figur 2 als ein Filterelement mit vertikal angeordneten Elektroden,
- Figur 3 als ein Filterbeutel in geschweißter oder genähter Ausführung,
- Figur 4 als ein zylindrisches Filterelement, welches von außen nach innen abfließend durchströmt wird,
- Figur 5 als ein zylindrisches Filterelement, das aus einem Innen und Außenrohr besteht und
- Figur 6 als Filtervorrichtung mit Filtertasse und Filterelement dargestellt.

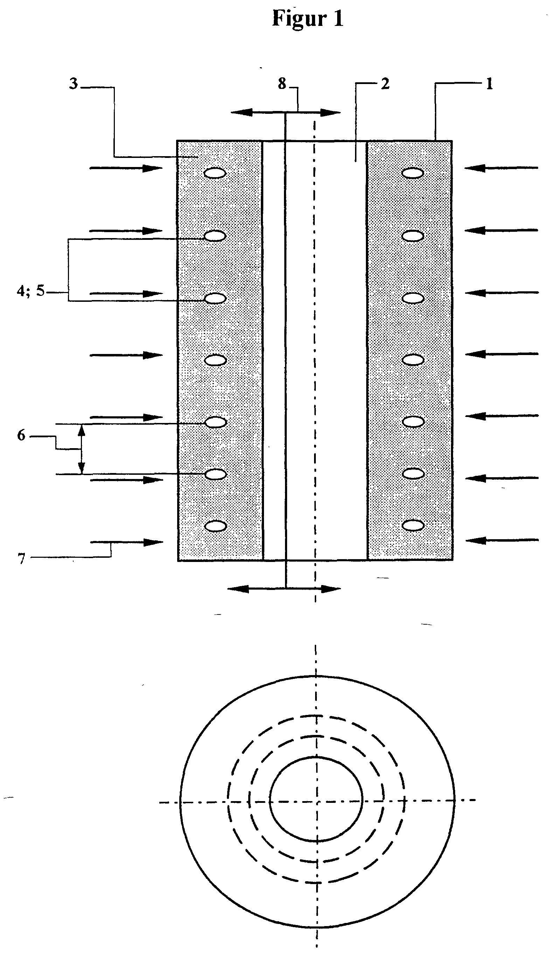

Das in Figur 1 dargestellte Filterelement 1 mit ringförmig angeordneten Elektroden ist aufgrund seiner Werkstoffkomponenten und der Herstellungstechnologie kompakt, selbststützend, porös, zylindrisch mit einer Innenbohrung 2 versehen und unproblematisch abdichtbar.
Es wird von außen nach innen bei sich nach innen reduzierenden Porenweiten eines Filtermediums 3 über den gesamten Umfang durchflossen. Filtermedien 3 bestehen aus Polyethylen, Polypropylen, Zellulose, Wolle, Sinterwerkstoffe u. a. Im Filtermedium 3 sind eine Vielzahl von Kohleelektroden 4 und Aluminiumelektroden 5 ringförmig, im Wechsel horizontal angeordnet. Der Elektrodenabstand 6 garantiert einen sehr geringen Stromfluß. Das zu filternde und zu behandelnde Schmutzwasser 7 wird beim Durchfluß durch das Filterelement 1 zum Elektrolyt zwischen den Elektroden mit polarisierten, elektrochemischen Doppelschichten und führt zu einer Aneinanderreihung von galvanischen Elementen bei ständigem Wechsel der Feldstärkenrichtung aus der Sicht der Filterelementlängsachse. Dies führt zur elektrolytischen Dissoziation bei geringer Ionenwanderungsgeschwindigkeit ohne Ionenanhaftungen an den Elektroden 4; 5 und gleichermaßen zur Hydratation der Wasserinhaltsstoffe. Kalkanhaftungen werden dadurch vermieden und bereits vorhandene Kalk- und Korrosionsinkrustationen sukzessive durch Ionenaktivierung umgewandelt und bei abschließender Passivschichtenbildung dispers im Wasser gelöst. Das gefilterte Schmutzwasser 7 tritt als Filtrat 8 aus der Innenbohrung 2 oben und unten bzw. oben oder unten aus.

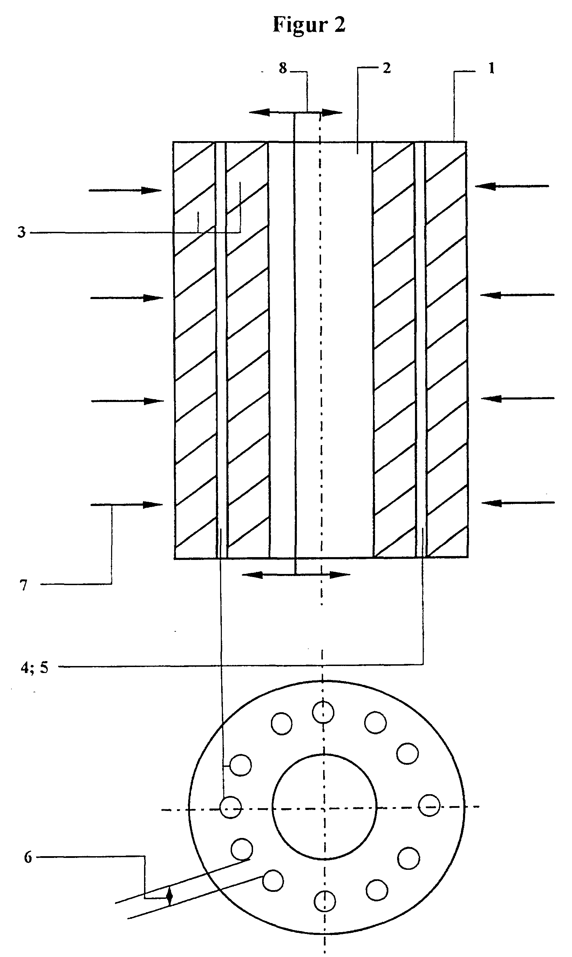

In Figur 2 ist das gleiche Filterelement 1, wie in Figur 1 dargestellt, ausgewiesen, nur mit dem Unterschied, daß die Elektroden 4; 5 vertikal angeordnet sind, wobei die gleichen Effekte eintreten wie nach dem Ausführungsbeispiel nach Figur 1.

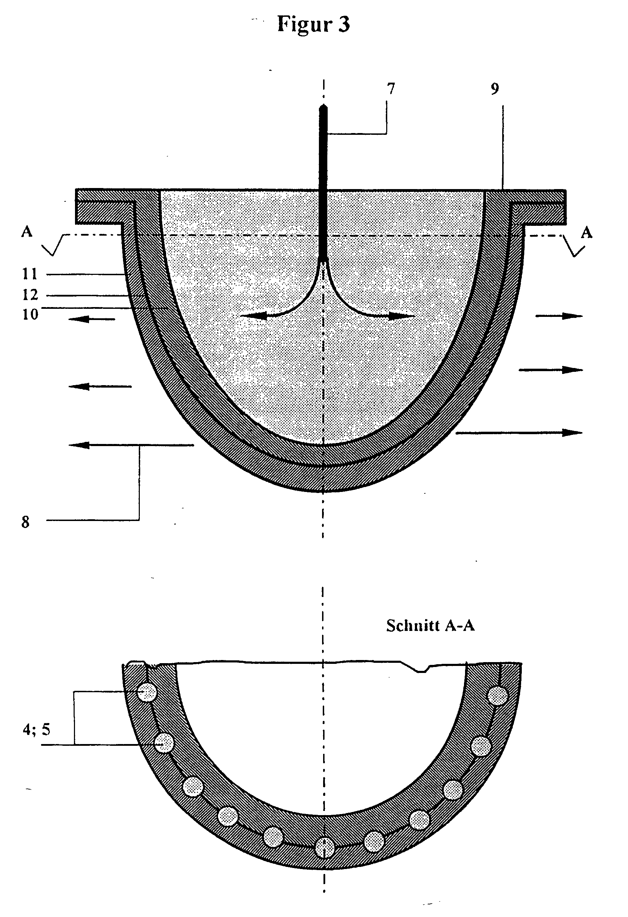

In Figur 3 ist ein geschweißter oder genähter Filterbeutel 9 dargestellt, der aus zwei Filterschichten 110 und einer Filterschicht II 11 besteht, wobei die Filterschichten I, II 10; 11 aus unterschiedlichen Porenweiten und einer dazwischenliegenden Matrix 12 zur Aufnahme und Abstandshaltung der Kohleelektroden 4 und der Aluminiumelektroden 5 bestehen. Die Elektroden 4; 5 können wie in der Darstellung vertikal oder auch horizontal angeordnet sein, indem die Elektroden 4; 5 in Wechsel angeordnet sind. Die Filterschichten I, II 10; 11 sind übliche Nadelfilze oder Gewebe aus Polyester, Polypropylen, Polytetrafluoräthylen, Viskose, Nylon, Baumwolle u. a. Der Filterbeutel 9 wird von innen nach außen bei nach außen reduzierter Porenweite vom Schmutzwasser 7 durchflossen, indem das Filtrat 8 den Filterbeutel 9 nach außen verläßt.

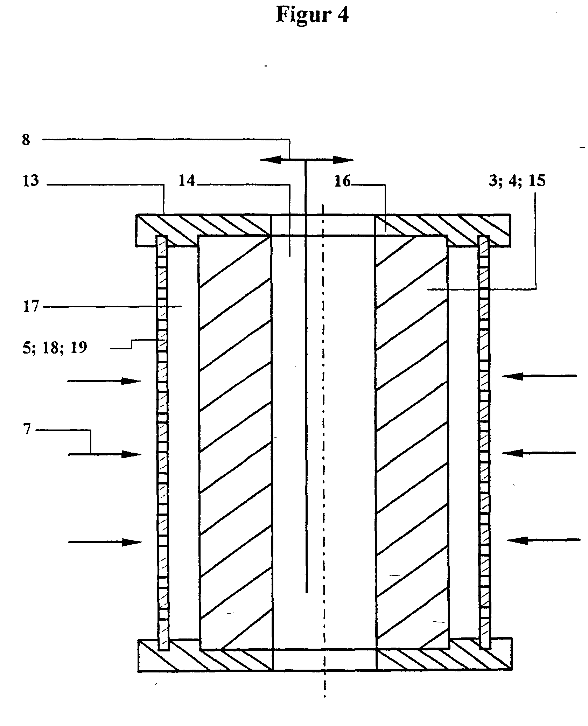

In Figur 4 ist ein zylindrisches Filterelement 13 im Schnitt dargestellt, welches vom Schmutzwasser 7 von außen nach innen als Filtrat 8 abfließend durch die zentrische Mittelbohrung 14 durchströmt wird. Der Aktivkohlefilter 15 als Kohleelektrode 4 bzw. Filtermedium 3 wird durch Abstandhalter 16 zur Bildung eines Elektrolysezwischenraumes 17 von der Aluminiumelektrode 5 als Lochblechummantelung 18 oder als Aluminiumgestrick 19 getrennt. Die Anordnung der Kohleelektrode 4 und die Anordnung der Aluminiumelektrode 5 kann auch umgekehrt erfolgen.

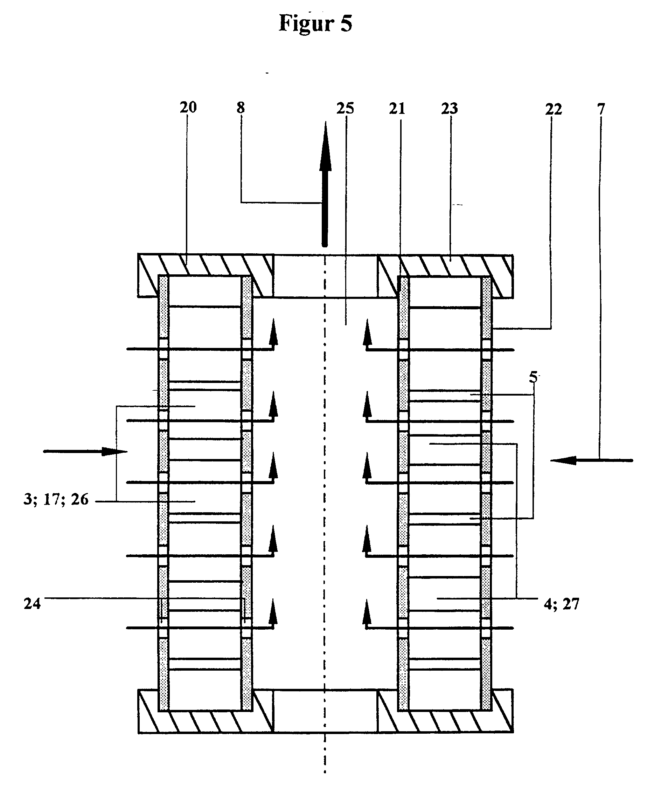

In Figur 5 ist ein zylindrisches Filterelement I 20 im Schnitt dargestellt, welches aus einem Innenrohr 21 und einem Außenrohr 22 besteht, die mit einer Vergußmasse 23 nach außen abgedichtet sind. Beide Rohre 21; 22 sind mit Radialbohrungen 24 versehen, die den Wasserdurchfluß von außen zur Zentralbohrung 25 zum Filtratabfluß 8 verbinden. Zwischen den Rohren 21; 22 sind zylindrische offenporige Schaumstoffscheiben 26 als Filtermedium 3 und Elektrolysezwischenraum 17 im Wechsel mit zylindrisch offenporigen aktivkohlebeschichteten Schaumstoffscheiben 27 als Kohleelektroden 4 und Aluminiumelektroden 5, wie in der Darstellung ersichtlich, periodisch angeordnet. Damit werden galvanische Elemente mit beschriebenen Effekten aneinander gereiht, die vom Schmutzwasser 7 durchflossen werden.

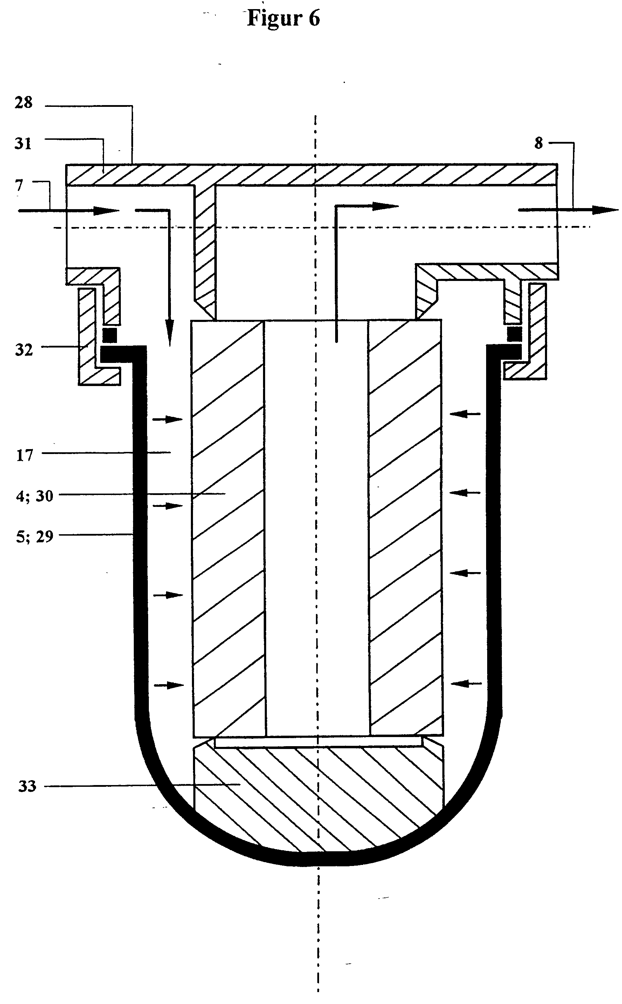

In Figur 6 ist eine Filtervorrichtung 28 im Schnitt dargestellt, bei der eine Filtertasse 29 aus Aluminium besteht und als Aluminiumelektrode 5 fungierend mit dem Filterelement II 30 aus filtergängiger Aktivkohle oder aus einem kohlenstoffbeschichtetem Filtermedium als Kohleelektrode 4 ein galvanisches Element mit dem Elektrolysezwischenraum 17 bildet. Die Elektroden 4; 5; 29; 30 sind elektrisch leitend nur durch das den Elektrolysezwischenraum 17 durchfließende, zu filternde und zu behandelnde Schmutzwasser 7 als Elektrolyt verbunden. Das Filteroberteil 31 ist mit der Filtertasse 29 durch die rundringabgedichtete Überwurfmutter 32 verbunden und besteht wie das Dicht- und Arretierelement 33 aus elektrisch nicht leitendem Material. Das Filtrat 8 wird durch das Filteroberteil 31 abgeleitet.

### Verwendete Bezugszeichen

- 1: Filterelement
- 2: Innenbohrung
- 3: Filtermedium
- 4: Kohleelektrode
- 5: Aluminiumelektrode
- 6: Elektrodenabstand
- 7: Schmutzwasser
- 8: Filtrat
- 9: geschweißtes oder genähtes Filterelement
- 10: Filterschicht I
- 11: Filterschicht II
- 12: Matrix
- 13: zylindrisches Filterelement
- 14: Mittelbohrung
- 15: Aktivkohlefilter
- 16: Abstandhalter
- 17: Elektrolysezwischenraum
- 18: Lochblechummantelung
- 19: Aluminiumgestrick
- 20: Filterelement I
- 21: Innenrohr
- 22: Außenrohr
- 23: Vergußmasse
- 24: Radialbohrung
- 25: Zentralbohrung
- 26: Schaumstoffscheibe
- 27: beschichtete Schaumstoffscheibe
- 28: Filtervorrichtung
- 29: Filtertasse
- 30: Filterelement II
- 31: Filteroberteil
- 32: Überwurfmutter
- 33: Dicht- und Arretierelement

## Patentansprüche

1. Filtervorrichtungen enthaltend Filterelemente mit Elektroden zur Filtration von Trink-, Sanitär-, Heiz- und Kühlwässern, dadurch gekennzeichnet,
- daß in den Filterelementen (1) ausschließlich eine interne elektrochemische Spannung mittels polarisierter Doppelschichten durch die Integration von Elektroden (4; 5) mit einem Elektrodenabstand (6) und unterschiedlichen Spannungspotentialen erzeugt wird, die zur elektrolytischen Dissoziation der Inhaltsstoffe des durch das Filtermedium (3) fließenden Elektrolyten Schmutzwasser (7) und zu deren verstärkter Hydratation infolge umhüllender Anlagerung von Wassermolekülen an die Ionen der Inhaltsstoffe durch Ion-Dipolwechselwirkung und damit zu wesentlicher Verbesserung des Lösungsverhaltens führen und
- daß der Elektrolyt Schmutzwasser (7) die einzig elektrisch leitende Verbindung zwischen den Elektroden (4; 5) herstellt, wodurch die Anreihung galvanischer Elemente mit periodisch wechselnder Richtung der Feldstärke, mit sehr geringer elektrischen Stromstärke und mit einem sehr hohen Ohmschen Widerstand entsteht.

2. Filtervorrichtungen nach Anspruch 1, dadurch gekennzeichnet, daß die Elektroden (4; 5; 15; 18; 19; 27; 29; 30) vertikal bis horizontal integriert sein können.

3. Filtervorrichtungen nach Anspruch 1 und 2,
dadurch gekennzeichnet,
daß die Anoden aus Kohlenstoff und die Kathoden aus Metallen mit negativem Spannungspotential bei reduzierter Wirkung, vorzugsweise aus Aluminium und seinen Legierungen, bestehen.

4. Filtervorrichtungen nach Anspruch 1 bis 3,
dadurch gekennzeichnet,
daß die Filterelemente (1; 9; 13; 20; 30) austauschbar sind.

5. Filtervorrichtungen nach Anspruch 1 bis 3, dadurch gekennzeichnet,
daß die Filterelemente (1; 13; 20; 30) rückspülbar sind.

6. Filtervorrichtungen nach Anspruch 1 bis 5,
dadurch gekennzeichnet,
daß das Filterelement (1) aus einem porösen kompakten, selbststützenden, Filtermedium (3) ausgeführt ist, welches eine Vielzahl von Elektroden (4; 5) mit unterschiedlichen elektrochemischen Spannungspotentialen als Anoden und Kathoden integriert, die vom zu behandelnden Schmutzwasser (7) als Elektrolyt durchflossen werden.

7. Filtervorrichtungen nach Anspruch 1 bis 4, dadurch gekennzeichnet,
daß ein zweischichtig geschweißter oder genähter Filterbeutel (9) vorhanden ist, der mit periodisch wechselnden Anoden und Kathoden (4; 5) bestückt ist, in dem eine Freiräume enthaltende Matrix (12) zur Aufnahme und Abstandhaltung der Elektroden (4; 5) dient und zwischen den beiden Filterschichten (10; 11) angeordnet ist.

8. Filtervorrichtungen nach Anspruch 1 bis 5, dadurch gekennzeichnet,
daß filtergängige Aktivkohle als Aktivkohlefilter (15) oder ein aktivkohlebeschichtetes Filtermedium (3) als Anode von einem gelochten oder porösen Aluminiumrohr als Lochblechummantelung (18) oder von einen Aluminiumgestrick (19) als Kathode umhüllt sind und die Elektroden (4; 5) durch elektrisch nicht leitende Abstandhalter (16) zur Bildung des Elektrolysezwischenraumes (17), der von Schmutzwasser (7) durchflossen wird, voneinander getrennt sind.

9. Filtervorrichtungen nach Anspruch 1 bis 5, dadurch gekennzeichnet,
daß zwischen einem inneren und äußeren elektrisch nicht leitenden gelochten Stützrohr (21, 22) offenzellige Schaumstoffscheiben (26) übereinander geschichtet und mit einer Zentralbohrung (25) zur Aufnahme des Innenrohres (21) versehen sind, die im Wechsel durch kohlenstoffbeschichtete offenzellige Schaumstoffscheiben (27) als Kohleelektroden (4) und durch Aluminiumelektroden (5) als Kathoden voneinander getrennt sind, die vom Schmutzwasser (7) von außen nach innen durch die von den offenzelligen Schaumstoffscheiben (26) geschaffenen Elektrolysezwischenräumen (17) durchflossen werden.

10. Filtervorrichtungen nach Anspruch 1 bis 5, dadurch gekennzeichnet,
daß eine Filtertasse (29) aus Aluminium besteht und als Aluminiumelektrode (5) fungiert, wobei ein Filterelement II (30) aus filtergängiger Aktivkohle oder aus einem kohlenstoffbeschichtetem Filtermedium (3) als Kohleelektrode (4) ein galvanisches Element mit einem Elektrolysezwischenraum (17) bildet, indem die Elektroden (29; 30) elektrisch leitend nur durch das den Elektrolysezwischenraum (17) durchfließende, zu filternde und zu behandelnde Schmutzwasser (7) als Elektrolyt verbunden sind .

## Claims

1. Filter appliances containing filter elements and electrodes, designed for filtration of potable water, sanitary water, heating and cooling water in which:
- An internal electrochemical voltage is generated exclusively in the filter elements (1) by means of polarised double layers through the integration of electrodes (4; 5) fixed at the electrode distance (6) and with different voltage potentials resulting in the electrolytic dissociation of ingredients of sewage water (7) flowing through the filter medium (3) and their intensified hydration due to the water molecules settling to the ions of ingredients through ion-dipole interaction and forming a coating there such that the solution behaviour will be considerably improved, and
- The sewage water (7) as electrolyte establishes the only electrically conductive connection between the electrodes (4, 5) such that a row of galvanic elements with periodically changing direction of field strength, with a very low electric current intensity and a very high ohmic resistance is formed.

2. Filter appliances as claimed in claim 1 in which the electrodes (4; 5; 15; 18; 19; 27; 29; 30) may be integrated vertically up to horizontally.

3. Filter appliances as claimed in claims 1 and 2 in which the anodes consist of carbon and the cathodes consist of metals with negative voltage potential and a reduced effect, preferentially of aluminium and its alloys.

4. Filter appliances as claimed in claims 1 to 3 in which the filter elements (1; 9; 13; 20; 30) are exchangeable.

5. Filter appliances as claimed in claims 1 to 3 in which the filter elements (1;13; 20; 30) can be back-flushed.

6. Filter appliances as claimed in claims 1 to 5 in which the filter element (1) consists of a porous and compact self-supporting filter medium (3) with a multitude of electrodes (4; 5) of different electrochemical voltage potentials integrated as anodes and cathodes through which the sewage water (7) to be treated flows as electrolyte.

7. Filter appliances as claimed in claims 1 to 4 in which a double-layer welded or sewed filter bag (9) is equipped with periodically alternating anodes and cathodes (4; 5) where a matrix (12) containing free spaces serves for accommodation and fixing of electrodes (4; 5) and is arranged between both filter layers (10; 11).

8. Filter appliances as claimed in claims 1 to 5 in which activated carbon suited for filtering is used as activated carbon filter (15) or a filter medium with activated-carbon coating (3) as anode is coated by a perforated or porous aluminium tube as perforated-sheet covering (18) or by a piece of knitted aluminium (19) as cathode, and in which the electrodes (4; 5) are separated from each other by electrically non-conductive spacers (16) such that an electrolysis interspace (17) is formed where sewage water (7) flows through.

9. Filter appliances as claimed in claims 1 to 5 in which discs of open-cell foamed material (26) are arranged one on top of the other between an internal and an external electrically non-conductive perforated supporting tube (21, 22). Said discs are provided with a central bore (25) for accommodation of the internal tube (21) and are isolated from each other by alternately arranged carbon-coated open-cell discs of foamed material (27) serving as carbon electrodes (4) and by aluminium electrodes (5) serving as cathodes where the sewage water (7) flows from outside to inside through the electrolysis interspaces (17) formed by the discs of open-cell foamed material (26).

10. Filter appliances as claimed in claims 1 to 5 in which a filter cup (29) of aluminium serves as aluminium electrode (5) whereas a filter element II (30) consisting of activated carbon suited for filtering or consisting of a carbon-coated filter medium (3) and serving as carbon electrode (4) forms a galvanic element with an electrolysis interspace (17) in which the electrodes (29; 30) are conductively connected only through the sewage water (7) to be filtered and treated which flows through the electrolysis interspace (17) as electrolyte.

## Revendications

1. Dispositifs de filtrage contenant des éléments de filtration avec des électrodes, pour la filtration d'eaux destinées à l'alimentation, d'eaux d'installations sanitaires, d'eaux de chauffage et de refroidissement,
caractérisés de manière,
- que dans les éléments de filtration (1) il se produit exclusivement une tension électrochimique interne par le moyen de couches doubles polarisées moyennant l'intégration d'électrodes (4; 5) avec une distance entre elles (6) et de potentiels de tension différents qui conduisent à la dissociation électrolytique des substances de l'électrolyte se présentant sous forme d'eaux usées (7) qui coulent à travers la couche filtrante (3), et à l'hydratation renforcée de ces substances à cause de la fixation enveloppante de molécules d'eau sur les ions des substances par le moyen de l'interaction ion - dipôle, et ainsi il y aura une amélioration considérable de la solubilité, et
- que l'électrolyte des eaux usées (7) produit l'unique liaison de conduite électrique entre les électrodes (4; 5), ce qui crée une série d'éléments galvaniques avec un changement périodique de la dirèction de l'intensité du champ, avec une intensité de courant électrique très faible et d'une résistance ohmique très haute.

2. Dispositifs de filtrage selon la revendication 1,
caractérisés de manière, que les électrodes (4; 5; 15; 18; 19; 27; 29; 30) peuvent être intégrés de manière verticale à horizontale.

3. Dispositifs de filtrage selon les revendications 1 et 2,
caractérisés de manière,
que les anodes sont composées en carbone et les cathodes sont en métaux avec un potentiel de tension négatif et d'un effet réduit, de préférence en aluminium et ses alliages

4. Dispositifs de filtrage selon les revendications 1 à 3,
caractérisés de manière,
que les éléments filtrants (1; 9; 13; 20; 30) sont échangeables.

5. Dispositifs de filtrage selon les revendications 1 à 3,
caractérisés de manière,
que les éléments filtrants (1; 13; 20; 30) sont rétrolavables.

6. Dispositifs de filtrage selon les revendications 1 à 5,
caractérisés de manière,
que l'élément filtrant (1) est composé d'une matière filtrante poreuse, compacte et autoporteuse (3) qui comporte un grand nombre d'électrodes (4; 5) avec des potentiels de tension électrochimiques différents comme anodes et cathodes, lesquels sont traversés par les eaux usées à traiter (7) formant l'électrolyte.

7. Dispositifs de filtrage selon les revendications 1 à 4,
caractérisés de manière,
qu'il existe un sac de filtrage à deux couches soudées ou cousues (9) qui est muni d'anodes et de cathodes périodiquement alternantes (4; 5), dans lequel une matrice (12) contenant des espaces libres, sert à héberger et à espacer les électrodes (4; 5), elle est placée entre les deux couches filtrantes (10; 11).

8. Dispositifs de filtrage selon les revendications 1 à 5,
caractérisés de manière,
que du charbon actif en usage de matière filtrante sous forme d'un filtre à charbon actif (15) ou une substance filtrante recouverte de charbon actif (3) comme anode est enveloppé d'un tube d'aluminium poreux ou perforé (18) ou d'un grillage d'aluminium (19) comme cathode, et les électrodes (4; 5) sont séparés l'un de l'autre par des écarteurs électriquement non conducteurs (16) formant l'espace intermédiaire de l'électrolyse (17) qui est traversé par les eaux usées (17).

9. Dispositifs de filtrage selon les revendications 1 à 5,
caractérisés de manière,
que entre un tube support intérieur et un tube support extérieur perforés électriquement non conducteurs (21, 22), des plaques en mousse à alvéoles ouvertes (26) sont posés l'une sur l'autre, au milieu munies d'un trou central (25) pour héberger le tube intérieur (21), qui, en alternant, sont séparées l'une de l'autre par des plaques de mousse à alvéoles ouvertes avec une couche de carbone (27) comme électrodes au carbone (4) et par des électrodes à l'aluminium (5) comme cathodes, et lesquelles sont traversées par les eaux usées (7) de l'extérieur vers l'intérieur, en passant par les espaces intermédiaires d'électrolyse formés par les plaques de mousse à alvéoles ouvertes (26).

10. Dispositifs de filtrage selon les revendications 1 à 5,
caractérisés de manière,
que une tasse de filtrage (29) consiste en aluminium et fonctionne en qualité d'électrode d'aluminium (5), et en même temps un élément de filtrage II (30) composé de charbon actif de filtrage ou d'une substance de filtrage revêtue de charbon (3) en qualité d'électrode au carbone (4) forme un élément galvanique avec un intermédiaire d'électrolyse (17), de manière que les électrodes (29; 30) sont liés entre eux seulement par les eaux usées (7), lesquelles sont à filtrer et à traiter, comme conducteur électrique passant à travers l'espace intermédiaire d'électrolyse (17).
